# EUROPEAN PATENT APPLICATION

(11) **EP 1 232 693 A2**
(43) Date of publication of application: **21.08.2002**
(21) Application number: 02250511.9
(22) Date of filing: 25.01.2002
(51) Int. Cl.: A23G 9/12, A23G 9/28

(54) **Apparatus for agitating ice cream in a ice cream vending machine**

(30) Priority: 16.02.2001 KR 2001007708; 26.07.2001 KR 2001045037
(71) Applicant: Samsung Kwangju Electronics Co., Ltd., Kwangju-city (KR)
(72) Inventor: Ryoo, To-suck, Buk-gu, Kwangju-city (KR); Han, Hong-suk, Kwangsan-gu, Kwangju-city (KR)
(74) Representative: Blatchford, William Michael

(57) **Abstract**

Apparatus for agitating bead-type ice cream in an ice cream vending machine comprises a screw member 52 rotatably disposed in a lower region of an ice cream canister 30, a worm wheel 110 disposed in contact with the screw member, so as to be rotatably driven by the rotational movement of the screw member, and an agitating member 120. Part of the agitating member 120 contacts the worm wheel 110. A lower part of the agitating member 120 is disposed in a lower region of the canister 30, and an upper part of the agitating member 120 is disposed in an upper region of the canister 30, the agitating member thereby agitating ice cream particles in both the upper and lower regions of the canister, evenly, by vibrating upwards and downwards due to the rotational movement of the worm wheel 110. Accordingly, by evenly agitating ice cream particles at both upper and lower regions of the canister 30, bead-shaped ice cream particles are prevented from becoming congealed and attached to one another.

## Description

The present invention relates to an ice cream vending machine for vending bead-type ice cream, i.e. ice cream in the form of bead-shaped particles or granules having a diameter of between approximately 3 to 7 mm. More particularly, the invention relates to an apparatus for agitating ice cream so as to prevent the ice cream granules, in a canister of the vending machine, from becoming attached to one another.

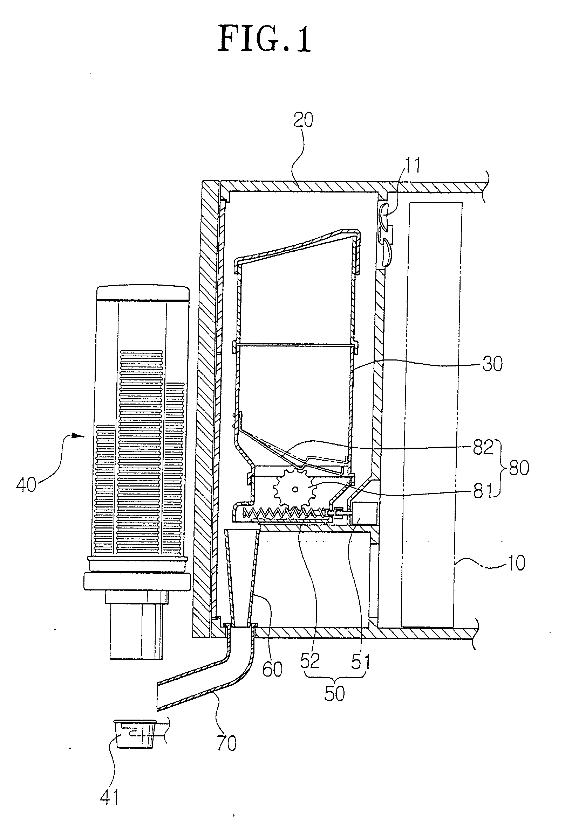

As shown in Figure 1, a known ice cream vending machine includes a refrigerating system 10, a cooling chamber 20 maintained at low temperature by the refrigerating system 10, a canister 30 arranged within the cooling chamber 20 and filled with bead-type ice cream, a cup feeding device 40 arranged external to the cooling chamber 20 (the cup feeding device being provided for storing and feeding cups 41) a discharging device 50 for discharging the ice cream from the canister 30, a chute and guiding member 70 for guiding the ice cream from the discharging device 50 to one of the cups 41, and an agitating device 80 for preventing ice cream granules in the canister 30 becoming attached to one another.

The refrigerating system 10 cools air inside the vending machine. The cooled air is blown into the cooling chamber 20 by a fan or blower 11.

In the canister 30, bead-type ice cream is provided, the bead-type ice cream being in the form of granules having a diameter of between approximately 3 mm and 7 mm. On the lower end of the canister 30 a discharge port 31 is provided so that ice cream contained therein, can be discharged therethrough. In order to maintain the shape of the ice cream particles in the canister 30, the cooling chamber 20 is maintained at a temperature of between approximately -43 and 27°C.

The ice cream discharging device 50 includes a motor 51 that is attached to a side wall of the cooling chamber 20. A rotatable screw member 52 is provided at the lower region of the canister 30, adjacent the motor 51. The screw member 52 is driven by the motor 51 such that resulting rotation of the screw member conveys the ice cream particles to the discharging port 31.

The chute 60 is provided below the discharging port 31 of the canister, the chute being arranged to direct the discharged ice cream to the guiding member 70. The guiding member 70 is positioned below the chute 60 and is arranged to guide the discharged ice cream particles to a cup 41 presented below the guiding member.

The agitating device 80 includes a worm wheel 81 which is driven by the rotating motion of the screw member 52, which, in this case, serves as a worm gear. An agitating member 82 is disposed above the worm wheel 81, the agitating member being in contact with the worm wheel. The agitating member 82 is in the form of a resilient plate member, bent into a particular shape. The agitating member 82 vibrates upwards and downwards with the rotational movement of the worm wheel 81, thereby agitating the ice cream particles which collect at the lower part of the canister 30.

In this conventional ice cream vending machine, when a customer inserts a predetermined amount of money and presses a selection button (not shown), the cup 41 is fed, by the cup feeding device 40, to a predetermined position below the guiding member 70. Due to the rotational movement of the screw member 52 (driven by the discharging motor 51) ice cream particles are discharged through the discharging port 31, and are collected in the cup 41 through the inner passage of the chute 60 and the guiding member 70. Whilst the screw member 52 rotates, the agitating member 82 agitates the ice cream (particles present in the lower portion of the canister 30) by vibrating upwards and downwards, thus preventing attachment of the ice cream particles to one another.

In this conventional ice cream vending machine, however, the agitating device 80 only agitates the ice cream particles which are at the lower portion of the canister 30 (i.e. in the proximity of the discharging port 31). Accordingly, ice cream particles which are in the upper portion of the canister 30 tend to become attached to one another. Accordingly, an empty space often remains in the lower portion of the canister 30 after a certain amount of ice cream particles are discharged out, the remaining particles staying in the upper portion. As a result, the ice cream particles are not continuously and properly discharged.

Furthermore, in this conventional ice cream vending machine, the agitating device 80 only operates during the discharge operation. Accordingly, the problems caused by the attachment of ice cream particles becomes even worse if the vending machine is not operated for a long period of time, e.g. at night, at dawn, in the winter season, etc.

It is desirable to overcome or reduce the above-mentioned disadvantages of the related art.

According to a first aspect of the present invention, there is provided an apparatus for agitating ice cream in an ice cream vending machine, the vending machine having a canister within which ice cream may be stored, the apparatus comprising: a rotatable screw member disposed within the canister; a worm wheel disposed in contact with the screw member, and rotably driven in accordance with rotational movement of the screw member; and an agitating member, a lower end of which is arranged in contact with the worm wheel and an upper end of which is arranged to be within an upper region of the canister, the agitating member, in use, being arranged to agitate ice cream particles in upper and lower portions of the canister evenly by means of being vibrated upwards and downwards due to the rotational movement of the worm wheel.

The agitating member may be formed by bending a resilient wire approximately into an appropriate rectangular shape, and having a contact portion protruding from a lower end of the agitating member so as to contact teeth of the worm wheel.

According to a second aspect of the present invention, there is provided apparatus for agitating ice cream in an ice cream vending machine, the apparatus comprising: a screw member rotatably disposed in a lower region of a canister; a worm wheel disposed in contact with the screw member, and arranged to be rotatably driven in accordance with rotational movement of the screw member; a first agitating member disposed such that a portion thereof contacts the worm wheel, the first agitating member being arranged to be vibrated upwards and downwards in accordance with rotational movement of the worm wheel thereby to agitate ice cream particles in a lower region of the canister; a motor; and a rotatable agitating member disposed in an upper region of the canister at a predetermined distance above the agitating member, the rotatable agitating member being arranged to be rotatably driven by the motor thereby to agitate ice cream particles in the upper region of the canister.

The rotatable agitating member may comprise a rotary shaft, one end of which is removably connected to an output drive shaft of the motor, and a plurality of protruding portions protruding outwardly from the rotary shaft, in a radial direction.

Accordingly, in addition to the ice cream particles which are in the lower portion of the canister, ice cream particles in the upper portion of the canister can also be agitated, the congealing or attachment of ice cream particles thereby being prevented, or at least reduced.

According to a third aspect of the present invention, there is provided an ice cream vending machine comprising: a chamber for storing ice cream, the chamber having lower and upper regions; an ice cream discharge mechanism for discharging ice cream from the chamber; and an agitating member disposed within the chamber, the agitating member being arranged to be vibrated in response to operation of the ice cream discharge mechanism and including one or more agitating portions which are arranged to vibrate in both the lower and upper regions of the chamber.

According to a fourth aspect of the present invention, there is provided An ice cream vending machine, comprising: a chamber for storing ice cream, the chamber having lower and upper regions; an ice cream discharge mechanism for discharging ice cream from the chamber; and first and second agitating members disposed within the chamber, the first agitating member being located within the lower region of the chamber and being arranged to vibrate in response to operation of the ice cream discharge mechanism, and the second agitating member being disposed within the upper region of the chamber and being arranged to rotate therein.

The invention will now be described, by way of example, with reference to the accompanying drawings, in which:
Figure 1 is a sectional side view of part of a known ice cream vending machine;
Figure 2 is a sectional side view of part an ice cream vending machine having a first agitating device in accordance with the invention;
Figure 3 is a perspective view of an agitating member forming part of the agitating device shown in Figure 2, the agitating member being shown when removed from the vending machine; and
Figure 4 is a sectional side view of part of an ice cream vending machine having a second agitating device in accordance with the invention.

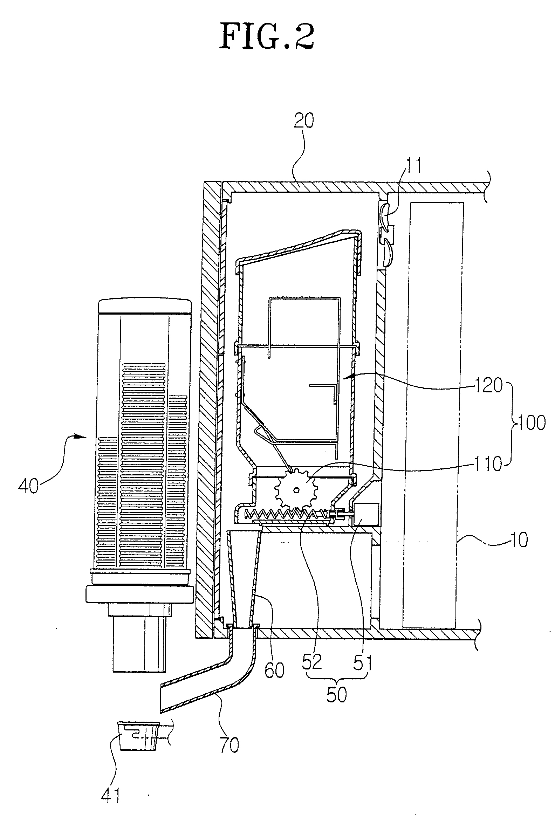

Referring to Figure 2, an ice cream vending machine includes a refrigerating system 10, a cooling chamber 20 maintained at low temperature (between approximately -43 and 27°C) by the freezing system, a canister 30 located in the cooling chamber 20 and filled with bead-type ice cream particles having a diameter of between approximately 3 and 7 mm, a cup feeding device 40 disposed external to the cooling chamber 20 and having a plurality of cups 41 stored therein for holding ice cream particles, a discharging device 50 for discharging the ice cream particles to one of the cups, a chute 60 and guiding member 70 for guiding the ice cream particles into one of the cups 41, and an agitating device 100 for preventing the ice cream particles in the canister 30 from becoming congealed, or attached to one another.

The ice cream discharging device 50 includes a motor 51 provided at a side wall of the cooling chamber 20, and a screw member 52 disposed at a lower region of the canister 30. The screw member 52 is rotatably driven by the motor 51 so as to convey the ice cream particles towards the discharging port 51.

The agitating device 10 includes a worm wheel 110, which is also rotatably driven by the rotational movement of the screw member 52 (which therefore acts as a worm gear), and an agitating member 120 disposed above the worm wheel 110, in contact therewith.

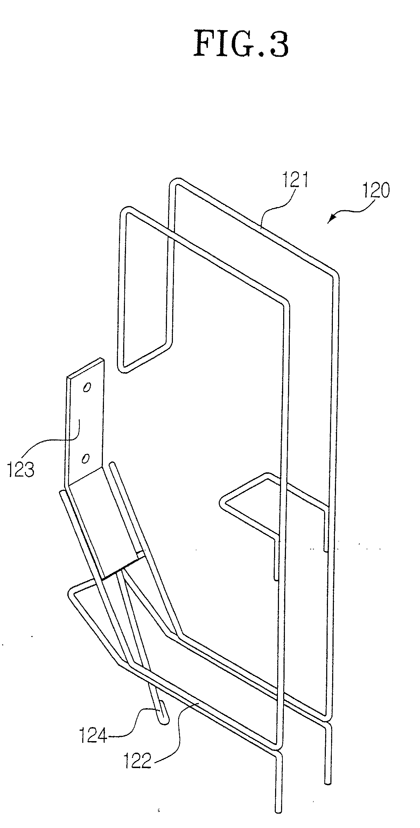

As shown in Figure 3, the agitating member 120 is formed by bending a number of resilient wires into an approximately rectangular shape, thereby defining a frame. The agitating member 120 is attached to a side wall of the canister 30 by means of a fixing plate portion 123, such that the upper end 121 of the agitating member is positioned in the upper portion of the canister 30 and the lower end 122 of the agitating member is positioned in the lower portion of the canister 30. At the lower end 122 of the agitating member 120, a protruding contact portion 124 extends downwards, in an inclined manner, to make contact with the teeth of the worm wheel 110 (see Figure 2). In operation, the member 120 vibrates upwards and downwards due to the rotational movement of the worm wheel 110 which agitates the ice cream particles in the canister 30.

In use, when a customer inserts money into the machine and presses a selection button (not shown), a cup 41 is fed, by the cup feeding device 40, to a predetermined position below the guiding member 70. The screw member 52 is rotatably driven by the motor 51, and ice cream particles are discharged through the discharging port 31 at a lower end of the canister 30. The ice cream particles then deposit in the cup 41, by means of passing through the passage of the chute 60 and the guiding member 70.

The rotational movement of the screw member 52 causes the worm wheel 110 to rotate also. Accordingly, the protruding contact portion 124 of the agitating member 120 vibrates since it intermittently contacts the teeth of the worm wheel 110 as the norm wheel rotates. Both the upper end 121 and the lower end 122 of the agitating member 120 vibrate upwards and downwards, evenly agitating the ice cream particles located at the upper and lower portions of the canister 30 and thus preventing attachment of ice cream particles to one another.

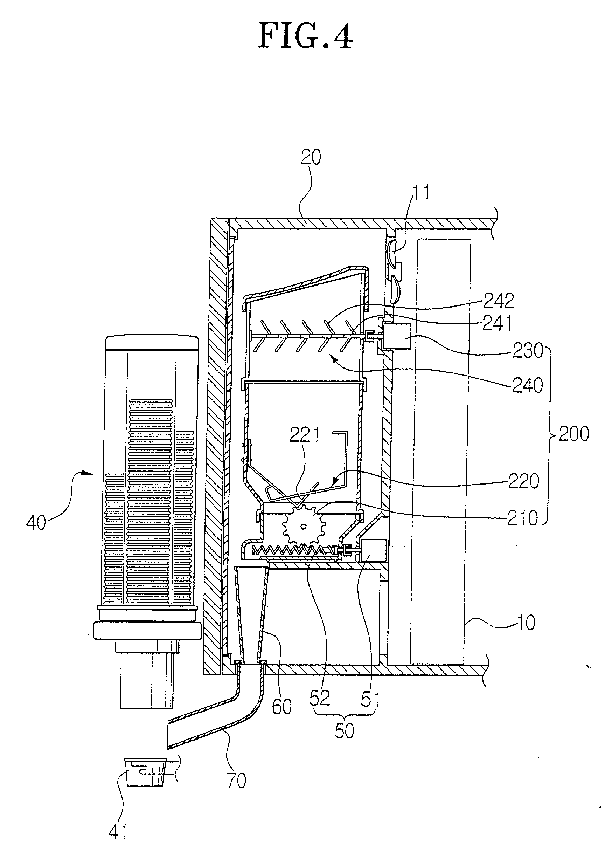

Figure 4 shows an ice cream vending machine having an alternative agitating device in accordance with the invention.

The ice cream vending machine shown in Figure 4 is identical to the vending machine shown in Figure 2, with the exception of the construction of the agitating device. Accordingly, only the agitating device will be described below.

Referring to Figure 4, the agitating device 200 includes a worm wheel 210 rotatably driven by the rotational movement of the screw member 52 which is rotatably driven by the discharging motor 51, and an agitating member 220 disposed above the worm wheel 210, in contact therewith, such that the agitating member will vibrate upwards and downwards with rotational movement of the worm wheel 210. A motor. 230 is provided at an upper part of the cooling chamber's side wall, and a rotatable agitating member 240 is disposed with the upper region of the canister 30, at a predetermined distance above the lower agitating member 220, the rotatable agitating member being rotated by the motor 230.

The agitating member 220 is formed of resilient wire, and has a protruding portion 221 formed on the lower end thereof which contacts the teeth of the worm wheel 210. When the worm wheel 210 rotates, the agitating member 220 vibrates both upwards and downwards as the protruding portion 221 meshes with the teeth of the worm wheel 210.

The rotatable agitating member 240 comprises a rotary shaft 241, one end of which is removably connected to a drive shaft of the agitating motor 230, and the other end of which is supported by a holder in the side wall of the canister 30. A plurality of protruding spar members 242 extend outwardly from the rotary shaft 241, in a generally radial manner.

In the agitating device 200 constructed above, when the screw member 52 and the worm wheel 210 are rotated by the operation of the motor 51, the agitating member 220 vibrates upwards and downwards, thereby agitating the ice cream particles in the lower portion of the canister 30. Also, as the rotatable agitating member 240 is rotated by the operation of the agitating motor 230, the ice cream particles in the upper portion of the canister 30 are also agitated.

When there is little or no vending of ice cream (e.g. at night or during winter), the ice cream particles can be agitated by the rotatable agitating member 220 since a controlling part (not shown) of the vending machine continues to invoke the operation of the agitating motor 230.

As described above, in the agitating device 100 described above with reference to Figures 2 and 3, since the upper end 121 of the agitating member 120 is positioned within the upper portion of the canister 30, and the lower end 122 of the agitating member 120 is positioned within the lower portion of the canister 30, ice cream particles in both the upper and lower portions of the canister 30 are evenly agitated, and thus attachment of the ice cream particles to each other is prevented or at least substantially reduced.

In the agitating device 200 described above with reference to Figure 4, one agitating member 220 is positioned in the lower portion of the canister 30, whilst a rotatable agitating member 240 is positioned in both the upper portion of the canister 30. Accordingly, the ice cream particles in the upper and lower portions of the canister 30 are agitated evenly. Further, since the agitating member 220 and the rotatable agitating member 240 are separately driven by, respectively, the 'discharge' motor 51 and the 'agitating' motor 130, the ice cream particles continue to be agitated by the rotatable agitating member 240 even when there is no vending of ice cream.

## Claims

1. An apparatus for agitating ice cream in an ice cream vending machine, the vending machine having a canister within which ice cream may be stored, the apparatus comprising:
a rotatable screw member disposed within the canister;
a worm wheel disposed in contact with the screw member, and rotably driven in accordance with rotational movement of the screw member; and
an agitating member, a lower end of which is arranged in contact with the worm wheel and an upper end of which is arranged to be within an upper region of the canister, the agitating member, in use, being arranged to agitate ice cream particles in upper and lower portions of the canister evenly by means of being vibrated upwards and downwards due to the rotational movement of the worm wheel.

2. Apparatus according to claim 1, wherein the agitating member is formed of a resilient wire frame of an approximately rectangular shape, the agitating member having a contact portion protruding from the lower end of the agitating member and being arranged to contact teeth of the worm wheel.

3. Apparatus for agitating ice cream in an ice cream vending machine, the vending machine having an ice cream canister within which ice cream may be stored, the apparatus comprising:
a motor; and
a rotatable agitating member disposed within an upper region of the canister, the agitating member being arranged to be rotably driven by the motor thereby to agitate ice cream particles in an upper portion of the canister.

4. Apparatus according to claim 3, wherein the agitating member comprises:
a rotary shaft, one end of which is removably connected to a drive shaft of the agitating motor; and
a plurality of radially protruding portions extending from the rotary shaft.

5. Apparatus for agitating ice cream in an ice cream vending machine, the apparatus comprising:
a screw member rotatably disposed in a lower region of a canister;
a worm wheel disposed in contact with the screw member, and arranged to be rotatably driven in accordance with rotational movement of the screw member;
a first agitating member disposed such that a portion thereof contacts the worm wheel, the first agitating member being arranged to be vibrated upwards and downwards in accordance with rotational movement of the worm wheel thereby to agitate ice cream particles in a lower region of the canister;
a motor; and
a rotatable agitating member disposed in an upper region of the canister at a predetermined distance above the agitating member, the rotatable agitating member being arranged to be rotatably driven by the motor thereby to agitate ice cream particles in the upper region of the canister.

6. Apparatus according to claim 5, wherein the rotatable agitating member comprises:
a rotary shaft, one end of which is removably connected to a drive shaft of the motor; and
a plurality of radially protruding portions extending from the rotary shaft.

7. An ice cream vending machine, comprising:
a chamber for storing ice cream, the chamber having lower and upper regions;
an ice cream discharge mechanism for discharging ice cream from the chamber; and
an agitating member disposed within the chamber, the agitating member being arranged to be vibrated in response to operation of the ice cream discharge mechanism and including one or more agitating portions which are arranged to vibrate in both the lower and upper regions of the chamber.

8. An ice cream vending machine according to claim 7, wherein the agitating member comprises a first agitating portion extending within the lower region of the chamber, and a second agitating portion extending within the upper region of the chamber.

9. An ice cream vending machine according to claim 8, wherein the agitating member is in the form of a generally C-shaped structure.

10. An ice cream vending machine according to any of claims 7 to 10, wherein the ice cream discharge mechanism includes a rotary wheel which is arranged to rotate when the ice cream discharge mechanism is operated, the agitating member further comprising a contact member for being intermittently contacted by the rotary wheel thereby to cause vibration of the or each agitating portion.

11. An ice cream vending machine, comprising:
a chamber for storing ice cream, the chamber having lower and upper regions;
an ice cream discharge mechanism for discharging ice cream from the chamber; and
first and second agitating members disposed within the chamber, the first agitating member being located within the lower region of the chamber and being arranged to vibrate in response to operation of the ice cream discharge mechanism, and the second agitating member being disposed within the upper region of the chamber and being arranged to rotate therein.

12. An ice cream vending machine according to claim 10, wherein the second agitating member comprises a rotary shaft having a plurality of spars extending outwardly therefrom, the rotary shaft being rotated by a motor.

13. An agitating member for an ice cream vending machine, the agitating member comprising one or more agitating portions for extending within lower and upper regions of a storage canister of the ice cream vending machine, the or each agitating portion being arranged to be vibrated in accordance with operation of an ice cream discharge mechanism of the ice cream vending machine.
